# EUROPÄISCHE PATENTSCHRIFT

(11) **EP 1 164 074 B1**
(45) Veröffentlichungstag und Bekanntmachung des Hinweises auf die Patenterteilung: **20.08.2008**
(21) Anmeldenummer: 01113585.2
(22) Anmeldetag: 15.06.2001
(51) Int. Cl.: B62D 53/02, E01H 1/08

(54) **Knickgelenktes Bodenreinigungsfahrzeug**
Floor cleaning vehicle with central pivot steering
Véhicule pour le nettoyage des sols avec direction à pivot central

(30) Priorität: 16.06.2000 DE 10029691
(43) Veröffentlichungstag der Anmeldung: 19.12.2001
(73) Patentinhaber: Hako-Werke GMBH, D-23843 Bad Oldesloe (DE)
(72) Erfinder: Scharff, Eckhard, 17389 Salchow (DE)
(74) Vertreter: UEXKÜLL & STOLBERG

(56) Entgegenhaltungen:
- DE-A- 1 555 088
- DE-A- 2 541 108
- DE-A- 2 658 932
- DE-U- 29 901 597
- US-A- 3 286 781
- US-A- 3 942 218
- US-A- 4 273 353

## Beschreibung

Die Erfindung bezieht sich auf ein knickgelenktes Bodenreinigungsfahrzeug mit einer auf den Vorderrädern abgestützten vorderen Plattform mit den Bedienungselementen für die Steuerung im Verfahrbetrieb, einer auf den Hinterrädern abgestützten hinteren Plattform mit zumindest einem Teil der Aggregate für den Reinigungsvorgang, einer die vordere und die hintere Plattform verbindenden Doppelpendelgelenkanordnung und zumindest einer Schlauchverbindung, die von einem unterhalb der vorderen Plattform gehalterten Reinigungselement zum auf der hinteren Plattform vorgesehenen Aufbau führt.

Bei einem bekannten Bodenreinigungsfahrzeug dieser Art (DE-A-2 541 108) ist durch die Anordnung des durch einen Saugmund gebildeten Reinigungselementes an der vorderen Plattform und die offenbar vorgesehene Anordnung von Teilen der Aggregate für den Reinigungsvorgang auf der hinteren Plattform bereits erreicht, dass sich ein verhältnismäßig kompakter Aufbau ergibt, weil nicht alle Aggregate für den Reinigungsvorgang auf einer einzigen Plattform vorgesehen sind. Bei dem bekannten Bodenreinigungsfahrzeug weist die Gelenkanordnung einen vertikalen Schwenkzapfen auf, um den die vordere und die hintere Plattform relativ zueinander verschwenkbar sind. Daher muß bei diesem Bodenreinigungsfahrzeug eine besonders aufwendige Radaufhängung vorgesehen werden, damit auch beim Überfahren von erheblichen Bodenunebenheiten immer alle Räder in Bodenkontakt stehen und das Reinigungselement im optimalen Abstand vom zu reinigenden Boden gehalten wird.

Es ist ferner bereits ein Bodenreinigungsgerät bekannt (US-A-3 942 218), das eine auf den Vorderrädern abgestützte vordere Plattform mit Bedienungselementen für die Steuerung im Verfahrbetrieb und eine auf den Hinterrädern abgestützte hintere Plattform mit einem Behälter für Reinigungsflüssigkeit und einem Behälter für verbrauchte, vom Boden aufgenommene Reinigungsflüssigkeit hat. Die beiden Plattformen sind durch eine Doppelgelenkanordnung verbunden, und am vorderen Ende der vorderen Plattform ist ein sich nach vorn erstreckendes, Walzenbürsten aufweisendes Reinigungsaggregat angelenkt. Von diesem erstrecken sich Schlauchverbindungen schräg nach oben in die vordere Plattform, und die Schlauchverbindungen für die Reinigungsflüssigkeit, die zwischen den beiden Plattformen verlaufen, erstrecken sich in etwa parallel zu der durch die Vorder- und Hinterräder gebildeten Auflageebene. Die Doppelgelenkanordnung weist einen an der vorderen Plattform befestigten vertikalen Schwenkzapfen und einen an der hinteren Plattform befestigten horizontalen Schwenkzapfen auf. Durch eine solche Gelenkanordnung wird erreicht, dass die Räder auch auf unebenen Böden immer alle in Berührung mit dem Boden stehen.

Der in der DE-A-2 658 932 beschriebene Radlader hat eine auf den Hinterrädern abgestützte hintere Plattform mit den Bedienungselementen für die Steuerung im Verfahrbetrieb und eine auf den Vorderrädern abgestützte vordere Plattform, an der die Schaufel sich nach vorn erstreckend schwenkbar befestigt ist. Die beiden Plattformen sind durch eine Doppelgelenkanordnung verbunden, die einen vertikalen Schwenkzapfen, der an der hinteren Plattform befestigt ist, und einen horizontalen Schwenkzapfen aufweist, der an der vorderen Plattform befestigt ist und dessen Mittelachse auf Höhe der Halterung des unteren Endes des vertikalen Schwenkzapfens in der zugehörigen Gabelaufnahme liegt. Ferner ist bei diesem Radlader zwischen der Gabelaufnahme für die Schwenkzapfen und der vorderen Plattform eine Dämpfungseinrichtung vorhanden, mittels derer die Verlagerungsbewegung der vorderen Plattform relativ zur hinteren Plattform gedämpft wird.

Es ist Aufgabe der Erfindung, ein einfach und besonders kompakt aufgebautes knickgelenktes Bodenreinigungsfahrzeug zu schaffen.

Zur Lösung dieser Aufgabe wird ein Bodenreinigungsfahrzeug der eingangs erwähnten Art erfindungsgemäß derart ausgestaltet, dass die Doppelpendelgelenkanordnung einen vertikalen Schwenkzapfen und eine Gabelaufnahme aufweist, in der der vertikale, erste Schwenkzapfen mit der hinteren Plattform gekoppelt sowie ein sich im wesentlichen in Verfahrrichtung erstreckender horizontaler, mit der vorderen Plattform gekoppelter zweiter Schwenkzapfen gehalten ist, so dass die Gabelaufnahme und die jeweilige Plattform relativ zueinander um die Längsachse des zugehörigen Schwenkzapfens schwenkbar sind, dass die Mittelachse des zweiten Schwenkzapfens auf Höhe oder unterhalb der Halterung des unteren Endes des ersten Schwenkzapfens in der Gabelaufnahme liegt, dass die Schlauchverbindung benachbart zum oberen Ende des ersten Schwenkzapfens und zum vorderen Ende des zweiten Schwenkzapfens verläuft und zum oberen Bereich des auf der hinteren Plattform vorgesehenen Aufbaus führt und dass zwischen Gabelaufnahme und vorderer Plattform einen Dämpfungseinrichtung vorgesehen ist, die mindestens ein Dämpfungselement und einen dessen Verlagerungsbewegung relativ zum zweiten Schwenkzapfen begrenzenden Anschlag aufweist.

Bei dem erfindungsgemäßen Bodenreinigungsfahrzeug ist somit eine Doppelpendelgelenkanordnung vorhanden, die zusätzlich zur Verschwenkung der beiden Plattformen relativ zueinander um eine vertikale Achse auch die Verschwenkung relativ zueinander um eine horizontale Achse ermöglicht, so dass auf einfache Weise erreicht wird, dass die Räder auch auf unebenen Böden immer alle in Berührung mit dem Boden stehen.

In diesem Zusammenhang sei erwähnt, dass sich die "vertikale" und "horizontale" Anordnung der Schwenkzapfen auf die normalerweise von den Vorder- und Hinterrädern gebildete Stand- oder Auflageebene bezieht.

Durch die erfindungsgemäße Anordnung des zweiten Schwenkzapfens der Doppelpendelgelenkanordnung am unteren Ende oder sogar unterhalb der Halterung des ersten Schwenkzapfens wird die Möglichkeit geschaffen, die Schlauchverbindung in ihrem Verlauf schräg von oben nach unten wesentlich näher am unteren Ende des ersten Schwenkzapfens anzuordnen, als dies der Fall wäre, wenn der zweite Schwenkzapfen, wie an sich bei derartigen Doppelpendelgelenkanordnungen üblich, auf Höhe der Mitte des ersten Schwenkzapfens läge. Auf diese Weise kann der Abstand zwischen vorderer und hintere Plattform deutlich reduziert und damit die Gesamtabmessung des erfindungsgemäßen Bodenreinigungsfahrzeuges weiter verringert werden.

Im Übrigen hat die erfindungsgemäße Anordnung des zweiten Schwenkzapfens den weiteren Vorteil, dass beim Schwenken der an der vorderen Plattform angeordneten Räder um diese Achse die seitliche Verlagerung der Räder deutlich reduziert wird, so dass sich ein besserer Geradeauslauf ergibt. In diesem Zusammenhang sei erwähnt, dass die Anordnung des zweiten Schwenkzapfens unterhalb des unteren Endes des ersten Schwenkzapfens so weit geführt werden kann, dass der zweite Schwenkzapfen gerade die erforderliche Bodenfreiheit für das Bodenreinigungsfahrzeug nicht beeinträchtigt.

Bei bekannten knickgelenkten Baufahrzeugen erstrecken sich zu beiden Seiten der den ersten und den zweiten Schwenkzapfen der Doppelpendelgelenkanordnung enthaltenden Ebene Wandabschnitte von Gabelaufnahme und vorderer Plattform, von denen der jeweils eine Wandabschnitt ein Dämpfungselement trägt und der andere Wandabschnitt als Begrenzungsanschlag für das Dämpfungselement dient. Diese Wandabschnitte sind im Wesentlichen horizontal gerichtet, und durch ihren Eingriff dämpfen und begrenzen sie die Schwenkbewegungen der Räder der vorderen Plattform um den zweiten Schwenkzapfen. Infolge der großen Abmessungen der bekannten Baufahrzeuge und der verhältnismäßig großen Abstände zwischen vorderer und hinterer Plattform beeinträchtigen diese Wandabschnitte die Verschwenkbewegungen der beiden Plattformen relativ zu einander um den ersten Schwenkzapfen nicht.

Da bei dem erfindungsgemäßen Bodenreinigungsfahrzeug der Abstand zwischen den beiden Plattformen geringer ist als bei bekannten, mit Doppelpendelgelenkanordnung ausgestatteten Baufahrzeugen, jedoch die relative Verschwenkung der beiden Plattformen zueinander um den ersten Schwenkzapfen möglichst nicht beeinträchtigt werden, also der erreichbare Kurvenradius möglichst klein sein soll, können das mindestens eine Dämpfungselement und der zugehörige Anschlag oberhalb der Mittelachse des zweiten Schwenkzapfens liegen, und das Dämpfungselement kann an einer nach oben und außen geneigten Wand angebracht und der Anschlag von einem nach oben und außen geneigten Wandabschnitt gebildet sein. Vorzugsweise ist dabei die das Dämpfungselement tragende Wand zwischen 15° und 30° zu der die Mittelachse beider Schwenkzapfen enthaltenden Ebene geneigt. Die Wand kann Teil der Gabelaufnahme sein.

Infolge dieser geneigten Anordnung von Dämpfungselement und den Anschlag bildendem Wandabschnitt ragen diese Bauelemente nicht derart weit in der Horizontalen nach außen, dass sie beim Schwenken der Plattformen um den ersten Schwenkzapfen relativ zueinander für eine dieser Plattformen eine Begrenzung der Verschwenkung bilden würden, d.h. Dämpfungselement und zugehöriger Anschlag verursachen keine Vergrößerung des minimalen Kurvenradius des Bodenreinigungsfahrzeuges.

Üblicherweise wird zu jeder Seite der die Mittelachse beider Schwenkzapfen enthaltenden Ebene ein Dämpfungselement und ein zugehöriger Anschlag vorgesehen.

Die Erfindung wird im Folgenden anhand der ein Ausführungsbeispiel zeigenden Figuren näher erläutert.
- Figur 1: zeigt in einer Seitenansicht ein Bodenreinigungsfahrzeug.
- Figur 2: zeigt das Bodenreinigungsfahrzeug aus Figur 1 in einer Ansicht schräg von oben, wobei ein Teil der Verkleidung im Bereich der vorderen Plattform entfernt ist.
- Figur 3: zeigt in einer perspektivischen Teildarstellung den Bereich der Doppelgelenkanordnung des Bodenreinigungsfahrzeuges gemäß Figuren 1 und 2.
- Figur 4: zeigt, wiederum in einer Teildarstellung, den Bereich der Doppelgelenkanordnung gemäß Figur 3 in einer anderen Ansicht.
- Figur 5: zeigt in perspektivischer Darstellung die Gabelaufnahme der Doppelgelenkanordnung aus den Figuren 3 und 4.
- Figur 6: zeigt die Gabelaufnahme aus Figur 5 in einer anderen Ansicht.

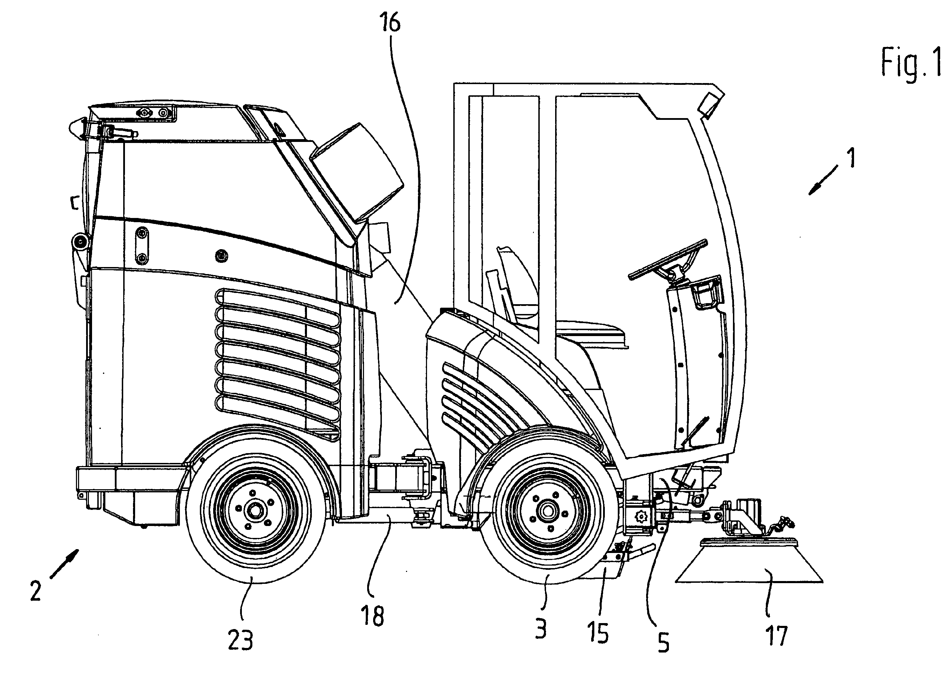

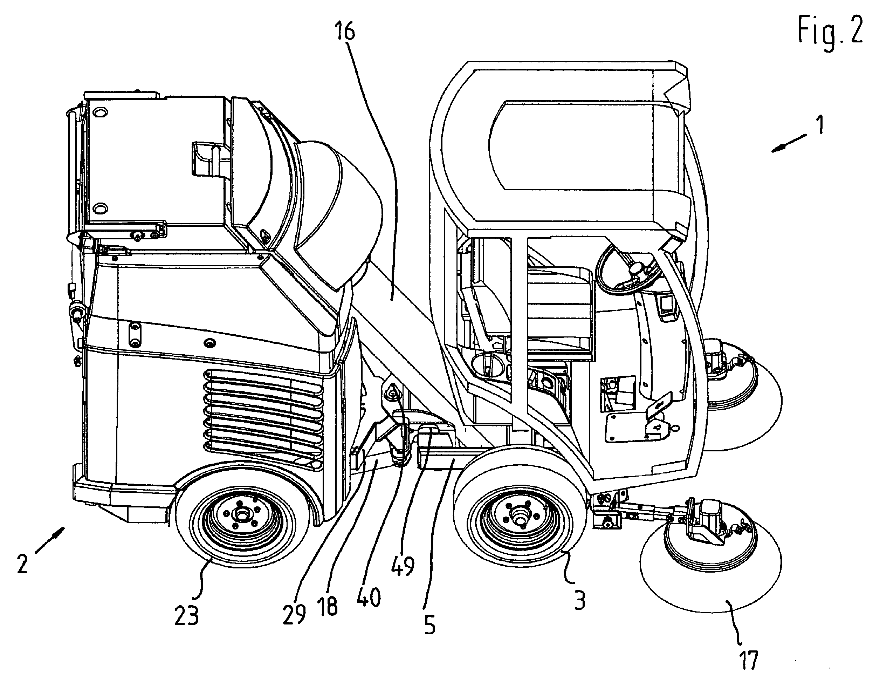

Das dargestellte Bodenreinigungsfahrzeug hat eine vordere Plattform 1, die auf Vorderrädern 3 und 4 abgestützt ist, die u.a. Rahmenträger 5, 6 aufweist, die in den Figuren 1 und 2 angedeutet sind, und auf der die Fahrerkabine mit den verschiedenen Bedienungselementen für die Steuerung des Bodenreinigungsgerätes angeordnet ist. An der Unterseite der Plattform 1 ist ein teilweise in Figur 1 erkennbarer Saugmund 15 angeordnet, und am vorderen Endbereich der Plattform 1 sind übliche Seitenbesen vorhanden, die im Reinigungsbetrieb drehend angetrieben werden, um vom Boden aufzunehmenden Schmutz in den Bereich des Saugmundes 15 zu transportieren. Von diesen beiden Seitenbesen ist nur der Seitenbesen 17 dargestellt.

Eine hintere Plattform 2 ist auf Hinterrädern 23 abgestützt und enthält u.a. Rahmenträger 25, 26. Sie trägt den größten Teil der für den Reinigungsbetrieb erforderlichen Aggregate, die nicht im Einzelnen dargestellt sind, zu denen jedoch ein Sauggebläse, ein Antrieb für das Sauggebläse, Filteranordnungen und ein Schmutzaufnahmebehälter gehören.

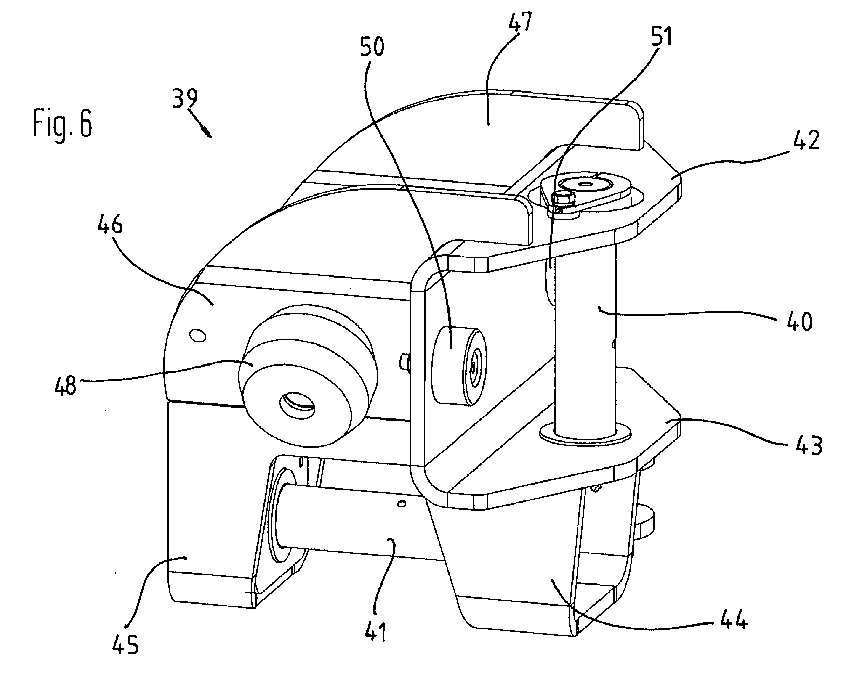

Die beiden Plattformen 1, 2 sind über eine Doppelpendelgelenkanordnung miteinander verbunden, die eine Gabelaufnahme 39 enthält, die sich zwischen den beiden Plattformen befindet. In dieser Gabelaufnahme ist ein vertikaler, erster Schwenkzapfen 40 mit seinen Enden zwischen einem oberen Wandabschnitt 42 und einem unteren Wandabschnitt 43 der Gabelaufnahme 39 unverdrehbar befestigt. Ein horizontaler zweiter Schwenkzapfen 41 ist in Wandbereichen 44 und 45 der Gabelaufnahme 39 unverdrehbar befestigt und befindet sich, wie insbesondere Figur 6 zu entnehmen ist, nicht nur mit seiner Längsachse, sondern mit seinem gesamten Umfang unterhalb des unteren Wandabschnittes 43 der Gabelaufnahme 39 und damit unterhalb der unteren Halterung des ersten Schwenkzapfens 40. Oberhalb des Wandbereichs 45 und dem zwischen diesem Wandbereich und dem Wandbereich 44 gebildeten Freiraum erstrecken sich in der Gabelaufnahme 39 Seitenwandabschnitte 46, 47 schräg nach oben und außen, wobei deren untere Teilbereiche unter einem Winkel von etwa 20° zur Ebene geneigt sind, in der die beiden Schwenkzapfen 40 und 41 liegen, und an deren Außenseiten Dämpfungselemente 48 und 49 befestigt sind.

An der dem ersten Schwenkzapfen 40 zugewandten Seite der die Wandabschnitte 42 und 43 verbindenden Wand der Gabelaufnahme 39 sind Anschlagelemente 50 und 51 befestigt. Diese liegen, ebenso wie die Dämpfungselemente 48 und 49, an gegenüberliegenden Seiten der die beiden Schwenkzapfen 40 und 41 enthaltenden Ebene.

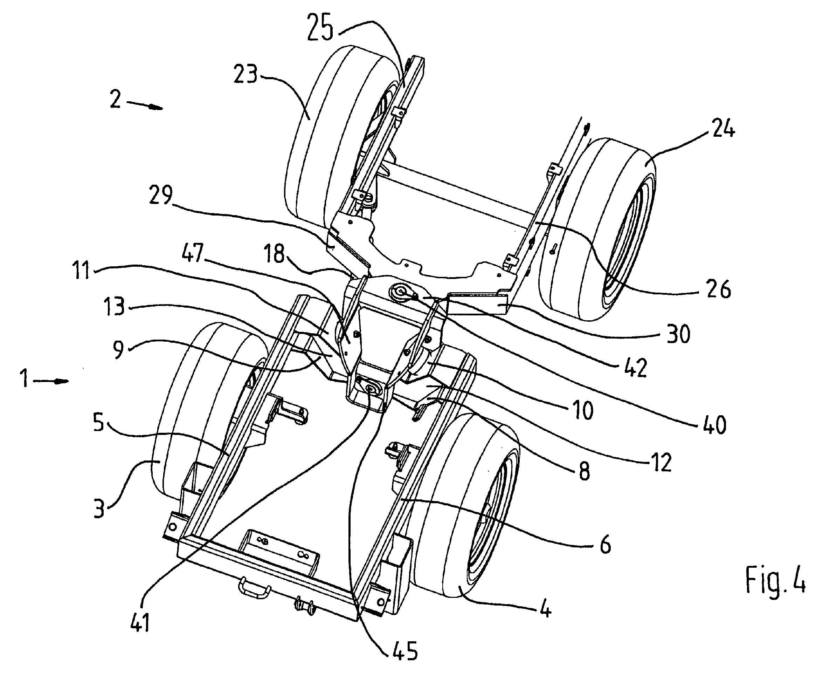

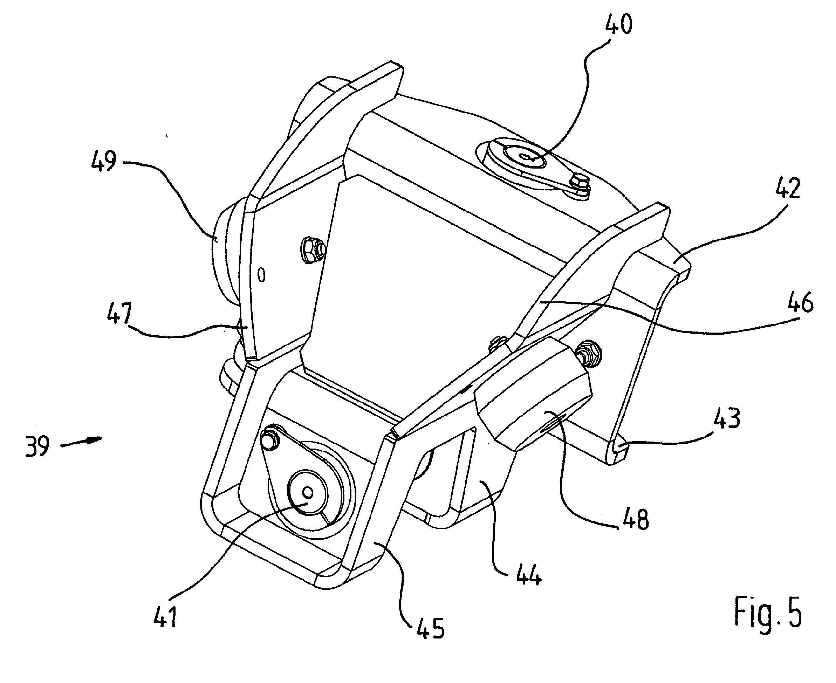

Wie insbesondere den Figuren 4 und 5 zu entnehmen ist, ist zwischen den Seitenwandabschnitten 46 und 47 und damit zwischen dem oberen Ende des Schwenkzapfens 40 und dem in diesen Figuren vorderen Ende des Schwenkzapfens 41 ein Freiraum gebildet, dessen Funktion später erläutert wird.

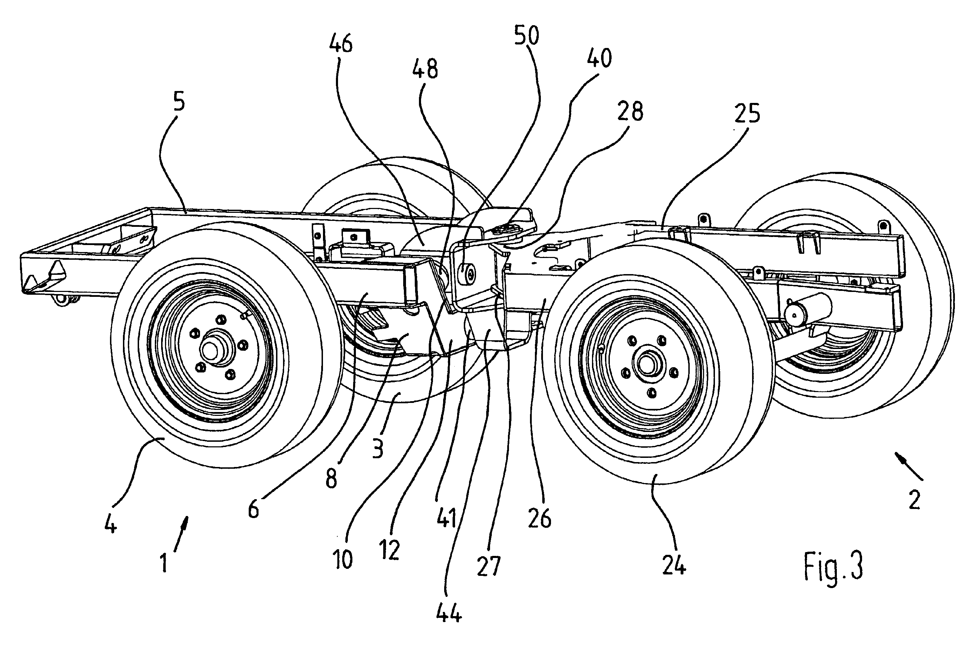

Wie insbesondere die Figuren 3 und 4 zeigen, sind die beiden Rahmenträger 25, 26 der hinteren Plattform 2 im vorderen Bereich miteinander verbunden, und dort sind mittige, vorspringende Wandabschnitte 27, 28 gebildet, durch die sich der erste Schwenkzapfen 40 erstreckt und die in nicht näher dargestellter Weise mittels Lagern schwenkbar mit diesem verbunden sind. Dadurch ist also eine Schwenkverbindung zwischen der hinteren Plattform 2 und dem Schwenkzapfen 40 und damit der Gabelaufnahme 39 ausgebildet.

Zwischen den Wandabschnitten 27 und 28 erstrecken sich Anschlagflächen 29 und 30 schräg nach außen, die bei Verschwenkung der hinteren Plattform 2 relativ zur Gabelaufnahme 39 zur Anlage mit dem zugehörigen Anschlagelement 50, 51 kommen, so dass auf diese Weise eine Begrenzung der Schwenkbewegung bewirkt wird.

Wie ebenfalls den Figuren 3 und 4 zu entnehmen ist, sind am hinteren Ende der Rahmenträger 5 und 6 der vorderen Plattform 1 schräg verlaufende Verbindungswände 8, 9 und 10, 11 vorgesehen, die im Abstand voneinander angeordnet sind und die beiden Rahmenträger 5, 6 verbinden. Zwischen den Verbindungswänden befinden sich fest mit diesen verbundene, im axialen Abstand liegende Querwände 12, 13, die die Gabelaufnahme im Bereich zwischen den Wandbereichen 44 und 45 durchsetzen und durch die sich der zweite Schwenkzapfen 41 erstreckt. In diesen Querwänden 12, 13 sind in nicht dargestellter Weise Lager für den Schwenkzapfen 41 vorgesehen, so dass die vordere Plattform 1 relativ um den Schwenkzapfen 41 und damit bezüglich der Gabelaufnahme 39 verschwenkbar ist.

Im montierten Zustand ist somit die hintere Plattform 2 um den senkrechten ersten Schwenkzapfen 40 und die vordere Platte 1 um den horizontalen zweiten Schwenkzapfen 41 relativ verschwenkbar, wobei zwischen hinterer Plattform 2 und Gabelaufnahmen 39 ein Lenker 18 angreift, der in nicht dargestellter Weise mittels eines Arbeitszylinders verlagerbar ist, so dass die hintere Plattform 2 gesteuert bezüglich der Gabelaufnahme 39 um den Schwenkzapfen 40 verschwenkt werden kann. Auf diese Weise erfolgt die Lenkung des Bodenreinigungsfahrzeugs im Verfahrbetrieb.

Durch die Verschwenkbarkeit der vorderen Plattform um den zweiten Schwenkzapfen 41, der sich in Verfahrrichtung des Bodenreinigungsfahrzeugs erstreckt, werden Bodenungleichmäßigkeiten ausgeglichen, und es wird erreicht, dass sich alle vier Räder 3, 4, 23, 24 immer am Boden befinden. Begrenzt wird diese Verschwenkbewegung um die zweite Schwenkachse 41 durch Anlage eines der Dämpfungselemente 48, 49 an der zugehörigen geneigten Verbindungswand 10, 11.

Wie bereits erwähnt, befindet sich unterhalb der vorderen Plattform 1 ein Saugmund 15, und dieser ist über eine einen Absaugschlauch enthaltende Schlauchverbindung 16 mit dem Sauggebläse auf der hinteren Plattform 2 verbunden. Die Schlauchverbindung 16 verläuft von einem oberen Bereich der Aufbauten der hinteren Plattform 2 schräg nach vorn und unten zu dem unterhalb der vorderen Plattform 1 befindlichen Saugmund 15 und dabei durch den vorstehend erwähnten Freiraum zwischen den Seitenwandabschnitten 47 und 48 der Gabelaufnahme 39. Auf diese Weise wird der für diese Verbindung erforderliche Abstand zwischen den Plattformen 1 und 2 gegenüber einer Anordnung reduziert, bei der in an sich üblicher Weise ein dem Schwenkzapfen 41 in seiner Funktion entsprechender Schwenkzapfen einer Doppelpendelgelenkanordnung auf Höhe der Mitte des in seiner Funktion dem Schwenkzapfen 40 entsprechenden Schwenkzapfens liegt.

## Patentansprüche

1. Knickgelenktes Bodenreinigungsfahrzeug mit
- einer auf den Vorderrädern (3, 4) abgestützten vorderen Plattform (1) mit den Bedienungselementen für die Steuerung im Verfahrbetrieb,
- einer auf den Hinterrädern (23, 24) abgestützten hinteren Plattform (2) mit zumindest einem Teil der Aggregate für den Reinigungsvorgang,
- einer die vordere und die hintere Plattform (1, 2) verbindenden Doppelpendelgelenkanordnung und
- zumindest einer Schlauchverbindung (16), die von einem unterhalb der vorderen Plattform (1) gehalterten Reinigungselement (15) zum auf der hinteren Plattform (2) vorgesehenen Aufbau führt,
**dadurch gekennzeichnet,**
**dass** die Doppelpendelgelenkanordnung einen vertikalen Schwenkzapfen (40) und eine Gabelaufnahme (39) aufweist, in der der vertikale, erste Schwenkzapfen (40) mit der hinteren Plattform (2) gekoppelt sowie ein sich im wesentlichen in Verfahrrichtung erstreckender horizontaler, mit der vorderen Plattform (1) gekoppelter zweiter Schwenkzapfen (41) gehalten ist, so dass die Gabelaufnahme (39) und die jeweilige Plattform (1; 2) relativ zueinander um die Längsachse des zugehörigen Schwenkzapfens schwenkbar sind,
**dass** die Mittelachse des zweiten Schwenkzapfens (41) auf Höhe oder unterhalb der Halterung des unteren Endes des ersten Schwenkzapfens (40) in der Gabelaufnahme (39) liegt,
**dass** die Schlauchverbindung (16) benachbart zum oberen Ende des ersten Schwenkzapfens (40) und zum vorderen Ende des zweiten Schwenkzapfens (41) verläuft und zum oberen Bereich des auf der hinteren Plattform (2) vorgesehenen Aufbaus führt und
**dass** zwischen Gabelaufnahme (39) und vorderer Plattform (1) einen Dämpfungseinrichtung vorgesehen ist, die mindestens ein Dämpfungselement (48, 49) und einen dessen Verlagerungsbewegung relativ zum zweiten Schwenkzapfen (41) begrenzenden Anschlag (10, 11) aufweist.

2. Bodenreinigungsfahrzeug nach Anspruch 1, **dadurch gekennzeichnet, dass** das Reinigungselement ein Saugmund (15) ist und die Schlauchverbindung (16) einen Saugschlauch enthält.

3. Bodenreinigungsfahrzeug nach Anspruch 1 oder 2, **dadurch gekennzeichnet, dass** das mindestens eine Dämpfungselement (48, 49) und der zugehörige Anschlag (10, 11) oberhalb der Mittelachse des zweiten Schwenkzapfens (41) liegen und dass das Dämpfungselement (48, 49) an einer nach oben und außen geneigten Wand (46, 47) angebracht und der Anschlag von einem nach oben und außen geneigten Wandabschnitt (10, 11) gebildet ist.

4. Bodenreinigungsfahrzeug nach Anspruch 3, **dadurch gekennzeichnet, dass** die das Dämpfungselement (48, 49) tragende Wand (46, 47) zwischen 15° und 30° zu der die Mittelachsen beider Schwenkzapfen (40, 41) enthaltenden Ebene geneigt ist.

5. Bodenreinigungsfahrzeug nach Anspruch 4, **dadurch gekennzeichnet, dass** die Wand (46, 47) Teil der Gabelaufnahme (39) ist.

6. Bodenreinigungsfahrzeug nach einem der Ansprüche 3 bis 5, **gekennzeichnet durch** ein Dämpfungselement (48; 49) und einen zugehörigen Anschlag (10; 11) auf jeder Seite der die Mittelachsen beider Schwenkzapfen (40, 41) enthaltenden Ebene.

## Claims

1. Bend-articulated floor cleaning vehicle with
- a front platform (1) supported on the front wheels (3, 4) with the operating elements for control during operation,
- a rear platform (2) supported on the rear wheels (23, 24) with at least some of the units for the cleaning process,
- a double pendulum joint assembly connecting the front and the rear platform (1, 2) and
- at least one hose connection (16), which leads from a cleaning element (15) mounted underneath the front platform (1) to a structure provided on the rear platform (2),
**characterised in that**
the double pendulum joint assembly comprises a vertical pivot pin (40) and a fork mount (39), in which the vertical, first pivot pin (40) with the rear platform (2) is connected, and a horizontal second pivot pin (41), which is coupled with the front platform (1) extending essentially in drive direction, is held, so that the fork mount (39) and the respective platform (1; 2) are pivotable relative to one another about the longitudinal axis of the respective pivot pin,
**in that** the middle axis of the second pivot pin (41) is at the height or underneath the mount of the lower end of the first pivot pin (40) in the fork mount (39),
**in that** the hose connection (16) runs adjacent to the upper end of the first pivot pin (40) and to the front end of the second pivot pin (41) and leads to the upper part of the structure provided on the rear platform (2) and
**in that** between the fork mount (39) and front platform (1) a damping device is provided which comprises at least one damping element (48, 49) and a stop (10, 11) delimiting its displacement movement relative to the second pivot pin (41).

2. Floor cleaning vehicle according to claim 1, **characterised in that** the cleaning element is a suction mouth (15) and the hose connection (16) contains a suction hose.

3. Floor cleaning vehicle according to claim 1 or 2, **characterised in that** at least one damping element (48, 49) and the associated stop (10, 11) are arranged above the middle axis of the second pivot pin (41), and **in that** the damping element (48, 49) is attached to a wall (46, 47) inclined upwards and outwards, and the stop is formed by a wall section (10, 11) that is inclined upwards and outwards.

4. Floor cleaning vehicle according to claim 3, **characterised in that** the wall (46, 47) supporting the damping element (48, 49) is inclined between 15° and 30° relative to the plane containing the middle axes of both pivot pins (40, 41).

5. Floor cleaning vehicle according to claim 4, **characterised in that** the wall (46, 47) is part of the fork mount (39).

6. Floor cleaning vehicle according to any one of claims 3 to 5, **characterised by** a damping element (48; 49) and an associated stop (10;11) on either side of the plane containing the middle axes of both pivot pins (40, 41).

## Revendications

1. Véhicule de nettoyage des sols à direction par châssis articulé, comprenant :
- une plate-forme avant (1) supportée par les roues avant (3, 4), portant les éléments de commande pour la commande pendant la conduite,
- une plate-forme arrière (2) supportée par les roues arrière (23, 24), portant au moins une partie des appareils destinés à l'opération de nettoyage,
- un agencement d'articulation double reliant les plates-formes avant et arrière (1, 2) l'une à l'autre, et
- au moins une connexion par tuyau flexible (16) menant d'un élément de nettoyage (15) fixé sous la plate-forme avant (1) vers l'équipement prévu sur la plate-forme arrière (2),
**caractérisé en ce**
**que** l'agencement d'articulation double comporte un axe de pivot vertical (40) et une chape d'articulation (39), via laquelle le premier axe de pivot vertical (40) est accouplé à la plate-forme arrière (2), et dans laquelle est maintenu un deuxième axe de pivot (41) horizontal, s'étendant essentiellement dans le sens de la marche de conduite, accouplé à la plate-forme avant (1), de manière telle que la chape d'articulation (39) et les plates-formes correspondantes (1 ; 2) puissent pivoter les unes par rapport aux autres autour de l'axe longitudinal de l'axe de pivot correspondant,
**que** l'axe central du deuxième axe de pivot (41) se situe à hauteur du, ou en dessous du support de l'extrémité inférieure du premier axe de pivot (40) dans la chape d'articulation (39),
**que** la connexion par tuyau flexible (16) s'étend de façon contiguë à l'extrémité supérieure du premier axe de pivot (40), et à l'extrémité avant du deuxième axe de pivot (41), pour rejoindre la partie supérieure de l'équipement prévu sur la plate-forme arrière (2), et
**qu'**un dispositif amortisseur est prévu entre la chape d'articulation (39) et la plate-forme avant (1), qui comprend au moins un élément amortisseur (48, 49) et une butée (10, 11) limitant les mouvements de débattement de celui-ci par rapport au deuxième axe de pivot (41).

2. Véhicule de nettoyage des sols selon la revendication 1,
**caractérisé en ce que**
l'élément de nettoyage est une buse d'aspiration (15), et la connexion par tuyau flexible (16) comporte un flexible d'aspiration.

3. Véhicule de nettoyage des sols selon la revendication 1 ou 2,
**caractérisé en ce que**
ledit au moins un élément amortisseur (48, 49) et la butée correspondante (10, 11) se situent au-dessus de l'axe central du deuxième axe de pivot (41), et que l'élément amortisseur (48, 49) est disposé sur une paroi (46, 47) inclinée vers le haut et vers l'extérieur, et que la butée est constituée par une section de paroi (10, 11) inclinée vers le haut et vers l'extérieur.

4. Véhicule de nettoyage des sols selon la revendication 3,
**caractérisé en ce que**
la paroi (46, 47) portant l'élément amortisseur (48, 49) est inclinée entre 15° et 30° par rapport au plan coupant les axes centraux des deux axes de pivot (40, 41).

5. Véhicule de nettoyage des sols selon la revendication 4,
**caractérisé en ce que**
la paroi (46, 47) fait partie de la chape d'articulation (39).

6. Véhicule de nettoyage des sols selon l'une des revendications 3 à 5,
**caractérisé par**
un élément amortisseur (48, 49) et une butée associée (10, 11) disposés de chaque côté du plan contenant les axes centraux des deux axes de pivot (40, 41).
